(19) Europäisches Patentamt
European Patent Office
Office européen des brevets

(11) **EP 3 483 781 B1**

(12) **EUROPEAN PATENT SPECIFICATION**

(45) Date of publication and mention
of the grant of the patent:
**06.10.2021 Bulletin 2021/40**

(51) Int Cl.:
***G06K 9/00*** *(2006.01)*     ***G06K 9/46*** *(2006.01)*

(21) Application number: **17465571.2**

(22) Date of filing: **13.11.2017**

(54) **DEVICE FOR DETECTING WINDSHIELD BLOCKAGE**

VORRICHTUNG ZUR ERKENNUNG EINER SICHTBEHINDERUNG IM BEREICH EINER WINDSCHUTZSCHEIBE

DISPOSITIF POUR DÉTECTER UN BLOCAGE DE PARE-BRISE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.05.2019 Bulletin 2019/20**

(73) Proprietor: **Continental Automotive GmbH**
**30165 Hannover (DE)**

(72) Inventor: **Radu, Petru**
**300692 Timisoara (RO)**

(74) Representative: **Continental Corporation**
**c/o Conti Temic microelectronic GmbH**
**Intellectual Property**
**Sieboldstraße 19**
**90411 Nürnberg (DE)**

(56) References cited:
**EP-A1- 2 879 370**     **EP-A1- 3 070 928**
**US-B2- 9 319 637**

• **Anonymous: "Summed area table", Wikipedia, the free encyclopedia , 2 May 2016 (2016-05-02), XP55269859, Retrieved from the Internet: URL:https://en.wikipedia.org/wiki/Summed_a rea_table [retrieved on 2016-05-02]**

**Description**

FIELD OF THE INVENTION

The present invention relates to a device for detecting windshield blockage of a vehicle, to a system for detecting windshield blockage for a vehicle, to a method for detecting windshield blockage for a vehicle, as well as to a computer program element and a computer readable medium.

BACKGROUND OF THE INVENTION

The general background of this invention is the field of driving systems that determine if a windscreen and/or windshield of a vehicle is suffering from a blockage.

US9319637A1 describes that a vision system for a vehicle includes a camera and a processor operable to process image data captured by the camera. When the vehicle is moving, the processor at least one of (a) reads a selected set of imager register values and compare a contrast of auto exposure control zones, and wherein, responsive to a determination that a range of contrast levels is less than a threshold level, the processor determines that there are contaminants at the lens or cover of the camera, and (b) monitors outputs of photosensing elements of the camera and, when the outputs fit a Gaussian distribution, the processor classifies the photosensing elements as blocked elements and, responsive to a determination that a number of the blocked photosensing elements is greater than a threshold level, the processor determines that there are contaminants at the lens or cover of the camera. US9319637A1 relies on a sequence of frames for an initial training that is required every time the algorithm starts. It counts the pixels that do not change from one frame to another,r and by employing a heuristic thresholding value representing the percentage of non-changing pixels, blockage is identified. However, changing illumination changing environments are problematic, for example if the obstruction is semi-transparent, when the car goes from shade to sun-light the intensities of the pixels change.

There is a need to provide an improved technique for blockage of a windshield or windscreen of a vehicle.

SUMMARY OF THE INVENTION

The object of the present invention is solved with the subject matter of the independent claims, wherein further embodiments are incorporated in the dependent claims. It should be noted that the following described aspects and examples of the invention apply also for the device for detecting windshield blockage of a vehicle, the system for detecting windshield blockage of a vehicle, the method for detecting windshield blockage of a vehicle, and for the computer program element and computer readable medium.

According to a first aspect, there is provided a device for detecting windshield blockage of a vehicle, comprising:

- an input unit;
- a processing unit; and
- an output unit.

The input unit is configured to provide the processing unit with at least one initial image, the at least one initial image relating to a scene external to a vehicle viewed through a windshield of the vehicle. The processing unit is configured to transform each initial image of the at least one initial image into an integral image. The processing unit is configured also to calculate summed pixel values for each of a plurality of areas in the at least one integral image. The processing unit is configured also to detect windshield blockage on the basis of a plurality of differences between the summed pixel values for all the available adjacent pairs of at least a subset of the plurality of areas. The output unit is configured to output information that at least a part of the windshield has a blockage.

In other words, the device utilizes the benefits of image processing an integral image, and detecting blockage on a windshield/windscreen by revealing the strength of the spatial relationship of different regions of the image. A weak spatial relationship between regions can be used to indicate the presence of a blockage, while a strong relationship between the regions can be used to indicate a clear field of view. The pixel values in one area in the integral image are summed and the pixel values in another area in the integral image are summed, and then the difference between these summed values is calculated.

In this way, an indication can be provided that a windscreen (windshield) is blocked and this information can be provided to other Advanced Drive Assistance ADAS algorithms that could be corrupted or mislead due to the windscreen being blocked or partially blocked.

In an example, a value at a position x, y, in the integral image is calculated as the sum of all the pixels values above and to the left in the initial image including the pixel value at position x, y, in the initial image.

In an example, the plurality of areas each contain the same number of pixels. The plurality of areas are situated along at least two lines that are angled one to the other. The windshield blockage is detected on the basis of a plurality of differences between the summed pixels values for all the available adjacent pairs of the subset of the plurality of areas.

In other words, if there are n areas situated along at least one line, then the pixels in the nth area are summed and the pixels in the n-1th are summed, and the difference calculated. Also, a difference between the summed pixel values for the n-1th and the n-2th areas is calculated, and difference between the summed pixels values for the n-2th and n-3 areas is calculated. Thus, for n areas n-1 differences are calculated for the summed pixels values.

In an example, at least one image segment is formed between at least parts of the plurality of lines, and for a segment that is bounded on two sides by a part of one line and by a part of a second line, the at least one subset of the plurality of areas comprises the plurality of areas on the part of the first line and on the part of the second line.

In other words, the processing unit is configured to detect a windshield blockage for a segment formed between a part of a first line and a part of a second line of on the basis of the differences between the summed pixels values for the plurality of areas on the part of the first line and on the part of the second line.

The processing unit is configured to detect windshield blockage on the basis of a variation in at least a subset of the plurality of differences.

In an example, detection of windshield blockage comprises utilisation of a training data set.

According to a second aspect, there is provided a system for detecting windshield blockage for a vehicle, comprising:

- at least one camera;
- a device for detecting windshield blockage of a vehicle according to the first aspect and any associated example.

The at least one camera is configured to be located within a vehicle and the at least one camera is configured to acquire the at least one image relating to a scene external to the vehicle viewed through a windshield of the vehicle. The device is located within the vehicle.

According to a third aspect, there is provided a method as defined by claim 6.

According to another aspect, there is provided a computer program element controlling apparatus as previously described which, when the computer program element is executed by a processing unit, is adapted to perform the method steps as previously described.

According to another aspect, there is also provided a computer readable medium having stored the computer element as previously described.

Advantageously, the benefits provided by any of the above aspects equally apply to all of the other aspects and vice versa.

The above aspects and examples will become apparent from and be elucidated with reference to the embodiments described hereinafter.

BRIEF DESCRIPTION OF THE DRAWINGS

Exemplary embodiments will be described in the following with reference to the following drawings:

Fig. 1 shows a schematic set up of an example of a device for detecting windshield blockage of a vehicle;
Fig. 2 shows a schematic set up of an example of a system for detecting windshield blockage of a vehicle;
Fig. 3 shows a method for detecting windshield blockage of a vehicle;
Fig. 4 shows an example of the positioning of a plurality of areas in a field of view of a camera;
Fig. 5 shows an example of one of the plurality of areas in an integral image formed from the image shown in Fig. 4; and
Fig. 6 shows a detailed logic flow for the blockage detection algorithm utilized for detailed examples of the device, system and method for detecting windshield blockage of a vehicle.

DETAILED DESCRIPTION OF EMBODIMENTS

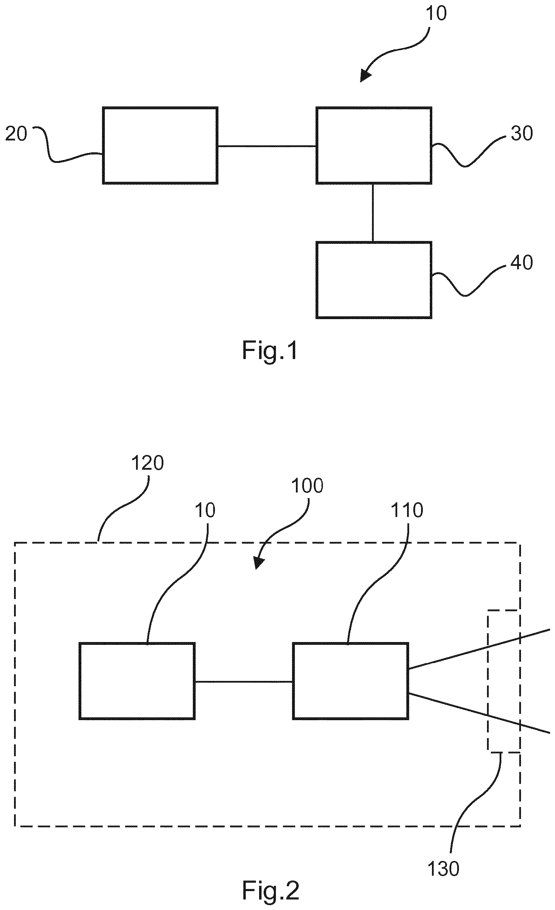

Fig. 1 shows an example of a device 10 for detecting windshield blockage of a vehicle. The device 10 comprises an input unit 20, a processing unit 30 and an output unit 40. The input unit 20 is configured to provide the processing unit 30 with at least one initial image, the at least one initial image relating to a scene external to a vehicle viewed through a windshield of the vehicle. The processing unit 30 is configured to transform each initial image of the at least one initial image into an integral image. The processing unit 30 is configured also to calculate summed pixel values for each of a plurality of areas in the at least one integral image. The processing unit 30 is configured to detect windshield blockage on the basis of a plurality of differences between the summed pixel values for all the available adjacent pairs of at least a subset of the plurality of areas. The output unit 40 is configured to output information that at least a part of the windshield has a blockage.

In an example, the at least one image was acquired by at least one camera that was not focussed on the windscreen of the vehicle.

Thus in this manner, standard vehicle cameras that are viewing scenes external to the vehicle as part of navigation and/or safety systems, or as part of automatic driving systems can also be utilised to determine if a part or portion(s) of a vehicle's windscreen is blocked or partially blocked, where that part or portion is the portion of the windscreen associated with the field of view(s) of the camera(s) viewing the scene through the windscreen.

According to an example, a value at a position x, y, in the integral image is calculated as the sum of all the pixels values above and to the left in the initial image including the pixel value at position x, y, in the initial image.

According to an example, the plurality of areas each contain the same number of pixels.

In an example, each area is 16x16 pixels in dimension. The plurality of areas are situated along at least two lines that are angled one to the other.

In an example, the plurality of areas are situated along at least three lines that are angled one to the other.

In an example, the at least one line bisects the centre of the integral image.

In an example, each of the at least one lines bisects the centre of the integral image.

In an example, one of the at least one lines is a horizontal line and the at least three lines intersect in the centre of the horizontal line. In an example, the horizontal line can move up and down in the image from one image to the next. In other words, the three lines can intersect at the centre of a horizontal line that can move up and down whilst driving.

In an example, one of the at least one lines is horizontally orientated in the at least one image.

The windshield blockage is detected on the basis of a plurality of differences between the summed pixel values for all the available adjacent pairs of at least a subset of the plurality of areas.

The at least two lines are angled one to the other. According to an example, at least one image segment is formed between at least parts of the plurality of lines. For a segment that is bounded on two sides by a part of one line and by a part of a second line, the at least one subset of the plurality of areas comprises the plurality of areas on the part of the first line and on the part of the second line.

In an example, for each of the segments bounded by parts of lines, the processing unit is configured to similarly detect a windshield blockage for each of those segments on the basis of the differences between the summed pixel values for the plurality of areas on the parts of the lines that border each of those segments.

According to an example, the processing unit is configured to detect windshield blockage on the basis of a variation in at least a subset of the plurality of differences.

In an example, the processing unit is configured to detect windshield blockage on the basis of a variation the plurality of differences.

According to an example, detection of windshield blockage comprises utilisation of a training data set.

In an example, the training data set comprises image data that exhibits windshield blockage. In an example, the training data set comprises image data that does not exhibit windshield blockage. This training data can be used to adjust the parameters of a classification algorithm, which decides based on the trained parameters if a new set of differences belongs to blocked/non-blocked regions.

In an example, a plurality of cameras can be utilised to have different fields of view through a vehicle's windscreen, thereby covering more area of the windscreen.

Fig. 2 shows an example of a system 100 for detecting windshield blockage for a vehicle. The system comprises at least one camera 110 and a device 10 for detecting windshield blockage of a vehicle as described above with respect to any of the examples of Fig. 1. The at least one camera 110 is configured to be located within a vehicle 120 and the at least one camera 110 is configured to acquire the at least one image relating to a scene external to the vehicle 120 viewed through a windshield 130 of the vehicle. The device is located on or within the vehicle.

In an example, the at least one camera 110 is the input unit 20.

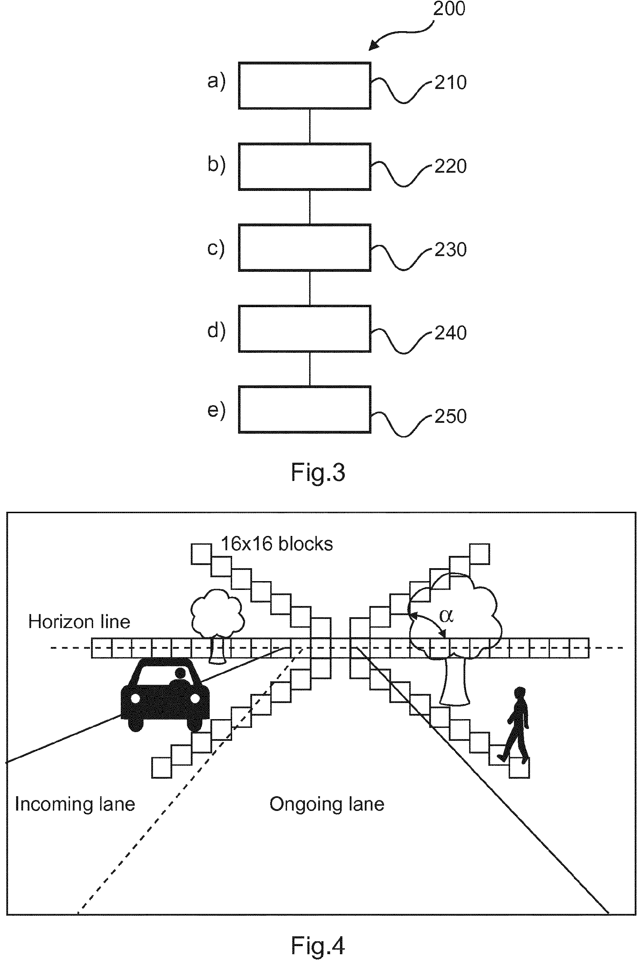

Fig. 3 shows a method 200 for detecting windshield blockage of a vehicle in its basic steps. The method 200 comprises:

in a providing step 210, also referred to as step a), providing a processing unit (30) with at least one initial image, the at least one initial image relating to a scene external to a vehicle viewed through a windshield of the vehicle;
in a transforming step 220, also referred to as step b), transforming by the processing unit each initial image of the at least one initial image into an integral image;
in a calculating step 230, also referred to as step c), calculating by the processing unit summed pixel values for each of a plurality of areas in the at least one integral image;
in a detecting step 240, also referred to as step d), detecting by the processing unit windshield blockage on the basis of at least one difference between the summed pixel values for at least a subset of the plurality of areas; and
in an outputting step 250, also referred to as step e), outputting with an output unit (40) output information that the at least a part of the windshield has a blockage.

In an example, a value at a position x, y, in the integral image is calculated as the sum of all the pixels values above and to the left in the initial image including the pixel value at position x, y, in the initial image.

In an example, the plurality of areas each contain the same number of pixels.

The plurality of areas are situated along at least two lines that are angled one to the other. In step d) the windshield blockage is detected on the basis of a plurality of differences between the summed pixels values for at least some of the adjacent pairs of the subset of the plurality of areas.

The differences are calculated for all the available adjacent pairs of the subset of the plurality of areas.

In an example, at least one image segment is formed between at least parts of the plurality of lines, and for a segment that is bounded on two sides by a part of one line and by a part of a second line, the at least one subset of the plurality of areas comprises the plurality of areas on the part of the first line and on the part of the second line.

In an example, the processing unit is configured to detect windshield blockage on the basis of a variation in at least a subset of the plurality of differences.

In an example, detection of windshield blockage comprises utilisation of a classifier.

In an example, detection of windshield blockage comprises utilisation of a training data set.

The device, system and method are now described in further detail with respect to Figs. 4-6.

The device, system and method described here enables the detection of detect blockage / partial blockage events occuring on the windscreen in front of the field of view of a camera-based driver assistance system. The design provides robustness of the blockage detection to external factors, such as illumination changes and partial obstructions. By utilizing the benefits of the image processing concept of the integral image, the present blockage detection algorithm reveals the strength of the spatial relationship of adiacent regions of the image. A weak spatial relationship between the regions can be used to indicate the presence of a blockage event, while a strong relationship between the regions can be used to indicate a clear field of view.

Thus, as described above the algorithm uses the concept of the integral image. When a new (or initial) image I is processed by the detector, an integral image I' is first computed. When computing an integral image, a Summed Area Table (SAT) is created with the same size as the initial image I. The table is the integral image I'. In this table, at any point (x,y) the value is represented by the sum of all the pixel values above, to the left and including the original pixel value of (x,y) itself.

The value in the SAT at (x,y) is simply calculated by:

$$I'(x,y) = \sum_{\substack{x'\leq x \\ y'\leq y}} I(x',y')$$

The SAT can be computed efficiently in a single pass over the image I, as the value in the SAT at (x,y) is

$$I'(x,y) = I(x,y) + I'(x-1,y) + I'(x,y-1) - I'(x-1,y-1)$$

The algorithm relies on the difference of sums of adjacent rectangles placed along 3 lines on the field of view of the camera. The rectangles for the ADAS blockage detector have a size of 16 by 16 pixels, but other dimensions can be used, depending on the application scenario. The rectangles are situated on 3 lines intersected at the center of the horizon line, as shown in Fig. 4.

Initially, the sum for all the 16 by 16 pixel blocks is computed by employing the integral image as discussed above. The windshield obstruction algorithm then computes the differences between sums of adjacent blocks of pixels and observes how much variation there is in a subset of differences.

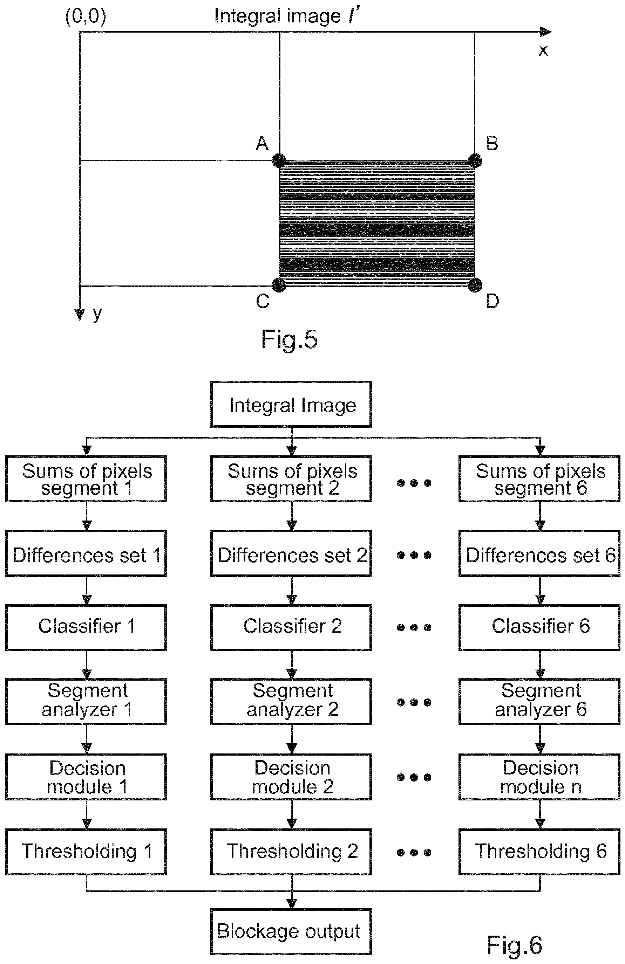

Fig. 5 shows an area of 16 pixels in the integral image. Thus, once the above equation has been used to calculate and fill up the SAT, that is generate an integral image, the task of calculating the sum of pixels in any rectangle, which is a subset of the original image, is carried out. To compute the sum of a rectangle from the original image, 4 values from the SAT can be used. Only using only these 4 values, the sum S of the pixels within a region defined by 4 points, A(x,y), B(x,y), C(x,y) and D(x,y) is computed by using the following equation:

$$S = I'(A) + I'(D) - I'(B) - I'(C)$$

Thus, although an integral image is calculated for the complete image, actually only integral image values need to be calculated for the rectangles shown in Fig. 4.

Returning to Fig. 4, the blocks of pixels (areas) are situated on 3 lines: one line is represented by the horizon line and the other two are symmetric to the first line, as observed in Fig. 4. The 3 lines form 6 segments, 2 from their intersection point to the left and right on the horizon line, 2 towards the top side and 2 towards the bottom side of the image. Thus one segment is bounded by part of one line of blocks of pixels at approx. 1 o' clock and by another part of one line of blocks at approx. 3 o' clock (30 degrees). A second segment is bounded by part of one line of blocks of pixels at approx. 3 o' clock and by another part of one line of blocks at approx. 4 o' clock (120 degrees). A third segment is bounded by part of one line of blocks of pixels at approx. 4 o' clock and by another part of one line of blocks at approx. 8 o' clock (240 degrees). A fourth segment is bounded by part of one line of blocks of pixels at approx. 8 o' clock and by another part of one line of blocks at approx. 9 o' clock (270 degrees). A fifth segment is bounded by part of one line of blocks of pixels at approx. 9 o' clock and by another part of one line of blocks at approx. 11 o' clock (330 degrees). And the sixth segment is bounded by part of one line of blocks of pixels at approx. 11 o' clock and by another part of one line of blocks at approx. 1 o' clock (30 degrees). The lines of blocks of pixels can be angled differently to that shown in Fig. 4, which is just an example. Also, there can be other numbers of lines of blocks of pixels (area) angled to one another as required, and as such there can be other numbers of segments bounded on both sides by blocks of pixels.

For each of the 6 segments, a set of differences between the sum of pixels between adjacent blocks is computed. If a segment has n blocks, n-1 differences will be generated. Thus, referring to the segment bounded by part of one line of segments at approx. 1 o' clock and by part of one line of segments at approx. 3 o' clock the n segments are those situated along both parts of those lines including the centre block of pixels. Thus the calculation of the differences between the summed values if adjacent blocks of pixels can be considered to start at one end of part of one line, progress to the centre pixel and then progress back out along the other part of the line that bounds a segment.

Large or small values of the differences for each of the 6 segments are a measure of the strength of the spatial relationship between the different regions of the initial image. Six training sets are formed by extracting the 6 sets of values from positive and negative examples of camera blockage events from multiple images and 6 training sets. Using the training sets, a number of 6 "2-class" generic classifiers (e.g. logistic regression) are trained. After the training of the 2-class classifiers is conducted, when a new image is acquired by the camera and processed as discussed above, the 6 classifiers can be used to output a set of 6 probabilities between 0 and 1. The output from each of the 6 classifiers represents the likelihood of the corresponding region of the image being obstructed.

Subsequently, for each line segment, a segment analyzer is used as a customizable algorithm to analyze the output of the 2-class classifiers. Each segment analyzer process a vector of outputs generated by one of the 2-class classifiers on a sequence of N frames. The segment analyzer performs a non-trainable mathematical operation, such as mean or median. The size of the vector N is variable and application specific. For a fast decision on a line segment, a small N can be chosen, while for an increased stability of the detector, a large value of N can be chosen.

The output of the segment analyzers is integrated into a decision module. In the decision module, thresholding of the output of the segment analyzers with empirically determined thresholds takes place, for different areas of the image and for day/night driving. The thresholding operation outputs binary 0 or 1 values. If the segment analyzers corresponding to line segments below the horizon line produce values below the threshold, this indicates that there is a bottom partial blockage.

As a vehicle (e.g. car) moves and a new frame is acquired, the 6 "2-class" classifiers produce their output and the corresponding segment analyzers update their vectors of probabilities. In this way, no abrupt changes occur in the output of the final detector, as only one of N components of the segment analyzers changes.

The confidence of the detector is represented by the equation below:

$$Conf = \begin{cases} \frac{1}{6}\sum_{i=1}^{6} segment\ analizer\ i\,, \text{if no blockage detected} \\ \frac{1}{p}\sum_{i=1}^{p} segment\ analizer\ i\ with\ output > threshold\ i\,, \text{if blockage detected} \end{cases}$$

Fig. 6 shows a detailed example of the logic flow of the blockage detection algorithm. The following steps are undertaken:

a) The image is received by the algorithm. An image can be seen as a matrix, with rows and columns.
b) The integral image is computed, thus obtaining a new matrix.
c) From the new matrix, the 6 sets of sums are computed.
d) Then, the 6 sets of differences are computed
e) The 6 sets of differences serve as input in the testing phase to a 2-class classifier. The classifier outputs a value between 0 and 1 representing the degree of confidence that a segment is part of a "blocked" region of the image (matrix).

f) 6 segment analyzers process the output of the 2-class classifiers. Each segment analyzer process a vector of outputs generated by one of the 2-class classifiers on a sequence of N frames. The segment analyzer will typically perform a non-trainable mathematical operation, such as mean or median.

g) In the decision module, thresholding of the output of the segment analyzers with empirically determined thresholds takes place.

Classification Task

Here, more detail relating to the classification task is presented. The classification task is part of the pattern recognition or (machine learning) field. A 2-class classification algorithm has as output a set of 2 numbers, showing the "probability" of the input belonging to a class, and the other value is "1- the probability". The above described classification algorithm receives as input numbers (named features) and utilizes a "training" phase, during which it adjusts a set of parameters to best fit a separation hyperplane between the 2 classes. The testing phase uses a set of "training features", which are input values with known output value (class belonging). After fitting, the hyperplane is tuned according to the training examples. In the "testing" phase the classifier simply outputs the probability of the given input belonging to one of the 2 classes.

The choice of the 2 class classification algorithm is application dependent: one could use naive Bayes classifier, or neural networks, or simple k-Nearest Neighbor. "Application dependent" here refers to hardware resources and desired level of accuracy, in other words to the specific application being considered.

In another exemplary embodiment, a computer program or computer program element is provided that is characterized by being configured to execute the method steps of the method according to one of the preceding embodiments, on an appropriate system.

The computer program element might therefore be stored on a computer unit, which might also be part of an embodiment. This computing unit may be configured to perform or induce performing of the steps of the method described above. Moreover, it may be configured to operate the components of the above described apparatus and/or system. The computing unit can be configured to operate automatically and/or to execute the orders of a user. A computer program may be loaded into a working memory of a data processor. The data processor may thus be equipped to carry out the method according to one of the preceding embodiments.

According to a further exemplary embodiment of the present invention, a computer readable medium, such as a CD-ROM, is presented wherein the computer readable medium has a computer program element stored on it which computer program element is described by the preceding section.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

**Claims**

1. A device (10) for detecting windshield blockage of a vehicle (120), the device (10) comprising:

   - an input unit (20, 110);
   - a processing unit (30); and
   - an output unit (40); wherein the input unit (20, 110) is configured to provide (210) the processing unit (30) with at least one initial image, the at least one initial image relating to a scene external to a vehicle viewed through a windshield (130) of the vehicle (120); wherein the processing unit (30) is configured to calculate (230) summed pixel values for each of a plurality of areas, wherein the plurality of areas are situated along at least two lines that are angled one to the other; wherein the processing unit (30) is configured to detect (240) windshield blockage on the basis of a plurality of differences between the summed pixel values for at least a subset of the plurality of areas; and wherein, the output unit is configured to output (250) information that at least a part of the windshield (130) has a blockage, **characterised in that** the processing unit (30) is configured to transform (220) each initial image of the at least one initial image into an integral image and to calculate (230) the summed pixel values in the at least one integral image,

said plurality of differences being a plurality of differences between the summed pixel values for all the available adjacent pairs of the subset of the plurality of areas.

2. Device according to claim 1, wherein the plurality of areas each contain the same number of pixels.

3. Device according to claim 1, wherein at least one image segment is formed between at least parts of the at least two lines, and wherein for a segment that is bounded on two sides by a part of one line and by a part of a second line, the at least one subset of the plurality of areas comprises the plurality of areas on the part of the first line and on the part of the second line.

4. Device according to any of claims 1-3, detection of windshield blockage comprises utilisation of a training data set.

5. A system (100) for detecting windshield blockage for a vehicle, comprising:

- at least one camera (110);
- a device (10) for detecting windshield blockage of a vehicle according to any of claims 1-4;

    wherein, the at least one camera is configured to be located within a vehicle (120) and the at least one camera is configured to acquire the at least one image relating to a scene external to the vehicle viewed through a windshield (130) of the vehicle; and
    wherein, the device (10) is configured to be located within the vehicle.

6. A method (200) for detecting windshield blockage of a vehicle, comprising:

    (a) providing (210) a processing unit (30) with at least one initial image, the at least one initial image relating to a scene external to a vehicle viewed through a windshield of the vehicle;
    (b) transforming (220) by the processing unit each initial image of the at least one initial image into an integral image;
    (c) calculating (230) by the processing unit summed pixel values for each of a plurality of areas in the at least one integral image, wherein the plurality of areas are situated along at least two lines that are angled one to the other;
    (d) detecting (240) by the processing unit windshield blockage on the basis of plurality of differences between the summed pixels values for all the available adjacent pairs of at least a subset of the plurality of areas; and
    (e) outputting (250) with an output unit (40) output information that the at least a part of the windshield has a blockage.

7. A computer program element for controlling a device according to any one of claims 1 to 4 and/or a system according to claim 5, which when executed by a processor is configured to carry out the method of claim 6.

8. A computer readable medium having stored the computer program element of claim 7.

**Patentansprüche**

1. Vorrichtung (10) zum Detektieren einer Windschutzscheibenblockade eines Fahrzeugs (120), wobei die Vorrichtung (10) Folgendes umfasst:

    - eine Eingabeeinheit (20, 110);
    - eine Verarbeitungseinheit (30); und
    - eine Ausgabeeinheit (40);

wobei die Eingabeeinheit (20, 110) konfiguriert ist, die Verarbeitungseinheit (30) mit wenigstens einem Startbild zu versorgen (210), wobei sich das wenigstens eine Startbild auf eine Stelle außerhalb eines Fahrzeugs bezieht, die durch eine Windschutzscheibe (130) des Fahrzeugs (120) gesehen wird; wobei die Verarbeitungseinheit (30) konfiguriert ist, aufsummierte Pixelwerte für jeden von mehreren Bereichen zu berechnen (230), wobei die mehreren Bereiche längs wenigstens zweier Linien angeordnet sind, die in einem Winkel zueinander verlaufen;

wobei die Verarbeitungseinheit (30) konfiguriert ist, eine Windschutzscheibenblockade auf der Basis von mehreren Differenzen zwischen den aufsummierten Pixelwerten für wenigstens eine Teilgruppe der mehreren Bereiche zu detektieren (240); und

wobei die Ausgabeeinheit konfiguriert ist, Informationen auszugeben (250), dass wenigstens ein Teil der Windschutzscheibe (130) eine Blockade hat, **dadurch gekennzeichnet, dass**

die Verarbeitungseinheit (30) konfiguriert ist, jedes Startbild des wenigstens einen Startbilds zu einem Gesamtbild zu transformieren (220) und die aufsummierten Pixelwerte in dem wenigstens einen Gesamtbild zu berechnen (230),

wobei mehrere Differenzen mehrere Differenzen zwischen den aufsummierten Pixelwerten für alle verfügbaren benachbarten Paare der Teilgruppe der mehreren Bereiche sind.

2. Vorrichtung nach Anspruch 1, wobei die mehreren Bereiche jeweils die gleiche Anzahl an Pixeln enthalten.

3. Vorrichtung nach Anspruch 1, wobei wenigstens ein Bildsegment wenigstens zwischen Teilen der wenigstens zwei Linien gebildet wird, und wobei für ein Segment, das auf zwei Seiten durch einen Teil einer Linie und durch einen Teil einer zweiten Linie begrenzt ist, die wenigstens eine Teilgruppe der mehreren Bereiche die mehreren Bereiche an dem Teil der ersten Linie und an dem Teil der zweiten Linie umfasst.

4. Vorrichtung nach einem der Ansprüche 1-3, wobei die Detektion einer Windschutzscheibenblockade die Nutzung eines Trainingsdatensatzes umfasst.

5. System (100) zum Detektieren einer Windschutzscheibenblockade für ein Fahrzeug, wobei das System Folgendes umfasst:

   - wenigstens eine Kamera (110);
   - eine Vorrichtung (10) zum Detektieren einer Windschutzscheibenblockade eines Fahrzeugs nach einem der Ansprüche 1-4;

   wobei die wenigstens eine Kamera so konfiguriert ist, dass sie sich in einem Fahrzeug (120) befindet, und wobei die wenigstens eine Kamera konfiguriert ist, das wenigstens eine Bild zu erfassen, das sich auf eine Stelle außerhalb des Fahrzeugs bezieht, die durch eine Windschutzscheibe (130) des Fahrzeugs gesehen wird; und

   wobei die Vorrichtung (10) so konfiguriert ist, dass sie sich im Fahrzeug befindet.

6. Verfahren (200) zum Detektieren einer Windschutzscheibenblockade eines Fahrzeugs, wobei das Verfahren die folgenden Schritte umfasst:

   (a) Versorgen (210) einer Verarbeitungseinheit (30) mit wenigstens einem Startbild, wobei sich das wenigstens eine Startbild auf eine Stelle außerhalb eines Fahrzeugs bezieht, die durch eine Windschutzscheibe des Fahrzeugs gesehen wird;
   (b) Transformieren (220) jedes Startbilds des wenigstens einen Startbilds durch die Verarbeitungseinheit zu einem Gesamtbild;
   (c) Berechnen (230) von aufsummierten Pixelwerten für jeden der mehreren Bereiche in dem wenigstens einen Gesamtbild durch die Verarbeitungseinheit, wobei die mehreren Bereiche entlang wenigstens zweier Linien angeordnet sind, die in einem Winkel zueinander verlaufen;
   (d) Detektieren (240) einer Windschutzscheibenblockade durch die Verarbeitungseinheit auf der Basis von mehreren Differenzen zwischen den aufsummierten Pixelwerten für alle verfügbaren benachbarten Paare von wenigstens einer Teilgruppe der mehreren Bereiche; und
   (e) Ausgeben (250) von Ausgabeinformationen mit einer Ausgabeeinheit (40), dass wenigstens ein Teil der Windschutzscheibe eine Blockade hat.

7. Computerprogrammelement zum Steuern einer Vorrichtung nach einem der Ansprüche 1 bis 4 und/oder eines Systems nach Anspruch 5, das dann, wenn es durch einen Prozessor ausgeführt wird, konfiguriert ist, das Verfahren nach Anspruch 6 auszuführen.

8. Computerlesbares Medium, auf dem das Computerprogrammelement nach Anspruch 7 gespeichert ist.

**Revendications**

1. Dispositif (10) de détection d'une obstruction de pare-brise d'un véhicule (120), le dispositif (10) comprenant :

- une unité d'entrée (20, 110) ;
- une unité de traitement (30) ; et
- une unité de sortie (40) ;

l'unité d'entrée (20, 110) étant configurée pour fournir (210) à l'unité de traitement (30) au moins une image initiale, l'au moins une image initiale étant relative à une scène à l'extérieur d'un véhicule observée à travers un pare-brise (130) du véhicule (120) ;
l'unité de traitement (30) étant configurée pour calculer (230) des valeurs de pixels sommées pour chacune d'une pluralité de zones, la pluralité de zones étant situées le long d'au moins deux lignes formant un angle entre elles ;
l'unité de traitement (30) étant configurée pour détecter (240) une obstruction de pare-brise sur la base d'une pluralité de différences entre les valeurs de pixels sommées pour au moins un sous-ensemble de la pluralité de zones ; et
l'unité de sortie étant configurée pour fournir en sortie (250) des informations indiquant qu'au moins une partie du pare-brise (130) présente une obstruction,

**caractérisé en ce que** l'unité de traitement (30) est configurée pour transformer (220) chaque image initiale de l'au moins une image initiale en une image intégrale et pour calculer (230) les valeurs de pixels sommées dans l'au moins une image intégrale, ladite pluralité de différences étant une pluralité de différences entre les valeurs de pixels sommées pour toutes les paires adjacentes disponibles du sous-ensemble de la pluralité de zones.

2. Dispositif selon la revendication 1, dans lequel la pluralité de zones contiennent chacune le même nombre de pixels.

3. Dispositif selon la revendication 1, dans lequel au moins un segment d'image est formé entre au moins des parties des au moins deux lignes, et dans lequel, pour un segment qui est borné des deux côtés par une partie d'une ligne et par une partie d'une deuxième ligne, l'au moins un sous-ensemble de la pluralité de zones comprend la pluralité de zones sur la partie de la première ligne et sur la partie de la deuxième ligne.

4. Dispositif selon l'une quelconque des revendications 1 à 3, dans lequel la détection d'une obstruction de pare-brise comprend l'utilisation d'un ensemble de données d'apprentissage.

5. Système (100) de détection d'une obstruction de pare-brise pour un véhicule, comprenant :

- au moins une caméra (110) ;
- un dispositif (10) de détection d'une obstruction de pare-brise d'un véhicule selon l'une quelconque des revendications 1 à 4 ;

l'au moins une caméra étant configurée pour être positionnée à l'intérieur d'un véhicule (120) et l'au moins une caméra étant configurée pour acquérir l'au moins une image relative à une scène à l'extérieur du véhicule observée à travers un pare-brise (130) du véhicule ; et
le dispositif (10) étant configuré pour être positionné à l'intérieur du véhicule.

6. Procédé (200) de détection d'une obstruction de pare-brise d'un véhicule, comprenant :

(a) la fourniture (210) à une unité de traitement (30) d'au moins une image initiale, l'au moins une image initiale étant relative à une scène à l'extérieur d'un véhicule observée à travers un pare-brise du véhicule ;
(b) la transformation (220), par l'unité de traitement, de chaque image initiale de l'au moins une image initiale en une image intégrale ;

(c) le calcul (230), par l'unité de traitement, de valeurs de pixels sommées pour chacune d'une pluralité de zones dans l'au moins une image intégrale, la pluralité de zones étant situées le long d'au moins deux lignes formant un angle entre elles ;

(d) la détection (240), par l'unité de traitement, d'une obstruction de pare-brise sur la base d'une pluralité de différences entre les valeurs de pixels sommées pour toutes les paires adjacentes disponibles d'au moins un sous-ensemble de la pluralité de zones ; et

(e) la fourniture en sortie (250), au moyen d'une unité de sortie (40), d'informations de sortie indiquant que l'au moins une partie du pare-brise présente une obstruction.

7. Élément de programme d'ordinateur pour commander un dispositif selon l'une quelconque des revendications 1 à 4 et/ou un système selon la revendication 5, qui, lorsqu'il est exécuté par un processeur, est configuré pour réaliser le procédé selon la revendication 6.

8. Support lisible par ordinateur sur lequel est enregistré l'élément de programme d'ordinateur selon la revendication 7.

Fig.1

Fig.2

Fig.3

Fig.4

(0,0)　　　　　Integral image $I'$

Fig.5

Fig.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9319637 A1